(19) Europäisches Patentamt
European Patent Office
Office européen des brevets

(11) EP 4 383 161 A1

(12) EUROPÄISCHE PATENTANMELDUNG

(43) Veröffentlichungstag:
12.06.2024 Patentblatt 2024/24

(51) Internationale Patentklassifikation (IPC):
G06Q 10/0637 (2023.01)

(21) Anmeldenummer: 22212402.6

(52) Gemeinsame Patentklassifikation (CPC):
G06Q 10/06375; G06Q 10/30

(22) Anmeldetag: 09.12.2022

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(71) Anmelder: Siemens Aktiengesellschaft
80333 München (DE)

(72) Erfinder:
• Schuh, Carsten
85598 Baldham (DE)
• Kördel, Martin
81369 München (DE)

(74) Vertreter: Siemens Patent Attorneys
Postfach 22 16 34
80506 München (DE)

(54) **VERFAHREN ZUR ENTSCHEIDUNGSFINDUNG ÜBER DIE WEITERNUTZUNG EINES PRODUKTS**

(57) Es wird ein Verfahren zur Auffindung einer Entscheidung über die weitere Nutzung eines ersten Produkts (P1) angegeben, wobei das erste Produkt (P1) zu einem ersten übergeordneten Produkttyp gehört,
- wobei die Entscheidung in der Auswahl der günstigsten von wenigstens zwei Handlungsoptionen (Opt1, Opt2) besteht,
- von denen die erste Handlungsoption (Opt1) eine Weiterverwendung des ersten Produkts (P1) beinhaltet
- und von denen die zweite Handlungsoption (Opt2) einen Verwurf des ersten Produkts (P1) beinhaltet,

- wobei das Verfahren die folgenden Schritte umfasst:
a) Bereitstellen einer Datenbank (DB) mit einer Mehrzahl von Lebenszyklusdaten des ersten übergeordneten Produkttyps,
b) Festlegen einer zu betrachtenden Zeitspanne (t),
c) Festlegen einer übergeordneten Optimierungsfunktion (F), welche einen oder mehrere Kostenbeiträge enthält, die während der zu betrachtenden Zeitspanne von dem Produkt verursacht werden,
- wobei wenigstens ein enthaltener Kostenbeitrag eine ökologische Kenngröße ($C_{e1}$) ist,

d) computergestützte Berechnung eines Vorhersagewerts (F(Opt1), F(Opt2) der Optimierungsfunktion für die jeweilige Handlungsoption (Opt1, Opt2) unter Verwendung der Datenbank (DB) und
e) Auswahl derjenigen Handlungsoption (Opt1, Opt2) mit dem niedrigsten Vorhersagewert der Optimierungsfunktion (F), optional bei gleichzeitigem Einhalten einer Randbedingung.
Weiterhin wird ein Computerprogrammprodukt zur

Ausführung eines solchen Verfahrens angegeben.

FIG 1

# EP 4 383 161 A1

**Beschreibung**

Die vorliegende Erfindung betrifft ein Verfahren zur Auffindung einer Entscheidung über die weitere Nutzung eines ersten Produkts, welches zu einem ersten übergeordneten Produkttyp gehört, wobei die Entscheidung in der Auswahl der günstigsten von wenigstens zwei Handlungsoptionen besteht, von denen die erste Handlungsoption eine Weiterverwendung des ersten Produkts beinhaltet und von denen die zweite Handlungsoption einen Verwurf des ersten Produkts beinhaltet. Weiterhin betrifft die Erfindung ein Computerprogrammprodukt zur Ausführung dieses Verfahrens.

Nach dem Stand der Technik werden Entscheidungen über die Weiternutzung von technischen Produkten meist von den Endnutzern dieser Produkte aufgrund von mehr oder weniger formell dokumentierten Erfahrungswerten über die im weiteren Verlauf zu erwartenden Kosten getroffen. Solche Entscheidungen stehen z.B. dann an, wenn ein technisches Produkt erste Ausfälle zeigt oder bestimmte Indikatoren auf ein nahendes Ende der primären Nutzungsphase hinweisen. So kann zum Beispiel eine Funktionsstörung einer Maschine dazu führen, dass der Nutzer der Maschine darüber entscheiden muss, ob er die Maschine reparieren lässt und anschließend weiterbenutzt oder ob er die Maschine außer Betrieb nimmt, entsorgt und durch eine neue Maschine ersetzt. Solche Entscheidungen werden von den Nutzern meistens vorrangig anhand von Erfahrungswerten für die monetären Kosten der verschiedenen Handlungsoptionen getroffen. Falls ökologische Aspekte bei solchen Entscheidungen überhaupt berücksichtigt werden, so geschieht dies typischerweise nur anhand von groben Schätzungen über die zu erwartenden Umweltbelastungen, die mit den verschiedenen Handlungsoptionen zusammenhängen.

Die Anmelderin weist an dieser Stelle darauf hin, dass unabhängig vom grammatikalischen Geschlecht eines bestimmten personenbezogenen Begriffs stets Personen mit männlicher, weiblicher und anderer Geschlechteridentität mit umfasst sein sollen.

Nachteilig bei dem herkömmlichen Vorgehen ist, dass die ökologischen Gesichtspunkte gegenüber den monetären Kosten vielfach vernachlässigt werden. Entsprechend fällt die Entscheidung wesentlich häufiger zugunsten einer Entsorgung und Neuanschaffung des Produkts aus, als dies bei stärkerer Berücksichtigung von ökologischen Aspekten der Fall wäre. Die Folge hiervon ist eine vergleichsweise hohe Belastung der Umwelt durch die Herstellung von unnötig vielen neuen Produkten und die Entsorgung der verworfenen Produkte.

Aufgabe der Erfindung ist es daher, Möglichkeiten zur Entscheidungsfindung über die Weiternutzung eines Produkts anzugeben, welches die genannten Nachteile überwinden. Insbesondere sollen Wege zur Entscheidungsfindung zur Verfügung gestellt werden, welche einerseits reproduzierbare Ergebnisse liefern und andererseits eine stärkere Berücksichtigung von Nachhaltigkeits-Aspekten fördern.

Diese Aufgaben werden durch das in Anspruch 1 beschriebene Verfahren und das in Anspruch 15 beschriebene Computerprogrammprodukt gelöst.

Das erfindungsgemäße Verfahren dient zur Auffindung einer Entscheidung über die weitere Nutzung eines ersten Produkts, welches zu einem ersten übergeordneten Produkttyp gehört, wobei die Entscheidung in der Auswahl der günstigsten von wenigstens zwei Handlungsoptionen besteht. Dabei beinhaltet die erste Handlungsoption eine Weiterverwendung des ersten Produkts, und die zweite Handlungsoption beinhaltet einen Verwurf des ersten Produkts. Das Verfahren umfasst die folgenden Schritte:

a) Bereitstellen einer Datenbank mit einer Mehrzahl von Lebenszyklusdaten des ersten übergeordneten Produkttyps,
b) Festlegen einer zu betrachtenden Zeitspanne,
c) Festlegen einer übergeordneten Optimierungsfunktion, welche einen oder mehrere Kostenbeiträge enthält, die während der zu betrachtenden Zeitspanne von dem Produkt verursacht werden, wobei wenigstens ein enthaltener Kostenbeitrag eine ökologische Kenngröße ist,
d) computergestützte Berechnung eines Vorhersagewerts der Optimierungsfunktion für die jeweilige Handlungsoption unter Verwendung der Datenbank und
e) Auswahl derjenigen Handlungsoption mit dem niedrigsten Vorhersagewert der Optimierungsfunktion, optional bei gleichzeitigem Einhalten einer Randbedingung.

Mit anderen Worten wird also eine Entscheidung zwischen der Weiterverwendung und dem Verwurf des Produkts getroffen. Dabei kann die erste Handlungsoption neben der Weiterverwendung des Produkts noch weitere Handlungen umfassen, insbesondere eine Reparatur oder sonstige Instandsetzung des Produkts. Optional können hierbei auch weitere Modifikationen an dem Produkt vorgenommen werden. Wesentlich ist, dass dasselbe Produkt-Individuum weiterhin in Betrieb bleibt. Demgegenüber kann die zweite Handlungsoption neben dem Verwurf des ersten Produkts allgemein zweckmäßig die Inbetriebnahme eines zweiten Produkts als Ersatzprodukt umfassen. Dieses Ersatzprodukt kann dem ersten Produkt in Bezug auf Design und Funktion gleichen. Es kann also insbesondere demselben ersten Produkttyp angehören. Alternativ kann das zweite Produkt aber auch in Design und/oder Funktion von dem ersten Produkt abweichen und somit einem zweiten Produkttyp angehören. Es kann sich bei dem Ersatzprodukt um ein neues Produkt handeln. Alternativ kann es sich aber auch um ein gebrauchtes (ggf. auch ein wiederaufbereitetes) Produkt handeln, welches das ursprüngliche Produkt ersetzt.

Insgesamt können bei der Entscheidungsfindung auch mehr als zwei Handlungsoptionen berücksichtigt werden. So kann z.B. die erste Option eine Reparatur des ersten Produkts bei Erhalt der Funktionalität sein, die zweite Option kann ein Verwurf des ersten Produkts sein, verbunden mit dem Ersatz durch ein baugleiches Produkt. Eine zusätzliche Option kann die Reparatur des ersten Produkts bei Einschränkung der Funktionalität sein, und/oder eine weitere Option kann die Reparatur bei Erweiterung der Funktionalität sein. Weitere mögliche Optionen können der Verwurf des Produkts und der Ersatz durch ein funktional eingeschränktes Alternativ-Produkt sein oder aber der Verwurf des Produkts und der Ersatz durch ein funktional erweitertes Alternativ-Produkt. Außerdem können sich die verschiedenen Handlungsoptionen auch in der Art der Entsorgung bzw. des Recyclings des verworfenen Produkts und/oder in der Art der Herstellung bzw. der Materialzusammensetzung des Ersatzprodukts unterscheiden. Wesentlich ist im Zusammenhang mit der vorliegenden Erfindung nur, dass zumindest eine Handlungsoption für die Weiterverwendung mit einer Handlungsoption für die Außerbetriebnahme des ersten Produkts verglichen wird.

In Schritt a) wird eine Datenbank mit Lebenszyklusdaten des ersten übergeordneten Produkttyps bereitgestellt. Diese Datenbank kann also statistische Daten über eine Vielzahl von bereits hergestellten und benutzten Produkten dieses Typs enthalten, also insbesondere solche statistischen Daten, die bei typischen Lebenszyklusanalysen (LCA für "Life Cycle Assessment") zum Einsatz kommen. Alternativ oder zusätzlich kann die Datenbank auch reale Herstellungs- und/oder Nutzungsdaten des betrachteten Produkt-Individuums für seine bereits vergangene Lebensphase beinhalten.

In Schritt b) wird eine zu betrachtende Zeitspanne festgelegt. Dies ist die Zeitspanne, innerhalb derer die beiden Handlungsoptionen in Bezug auf die wenigstens eine ökologische Kenngröße (und optionale weitere Kenngrößen) verglichen werden. Dabei kann das erhaltene Ergebnis für die Entscheidung von der Wahl der betrachteten Zeitspanne abhängen. Die Zeitspanne sollte sich also an der relevanten Nutzungsdauer orientieren, für die das Produkt in der Zukunft gebraucht wird. Gegebenenfalls kann die betrachtete Zeitspanne auch die Entsorgung des ersten Produkts und/oder eines potentiellen Ersatzprodukts einschließen. In diesem Fall kann auch die Umweltbilanz des Recyclings oder anderer Entsorgungswege zwischen dem ersten Produkt und dem Ersatzprodukt verglichen werden.

In Schritt c) wird eine übergeordnete Optimierungsfunktion festgelegt, mit anderen Worten eine charakteristische Funktion der jeweiligen Handlungsoption, welche im Rahmen der Entscheidungsfunktion minimiert werden soll. Bei der Optimierungsfunktion kann es sich insbesondere um eine Kostenfunktion handeln, welche aus ein oder mehreren Kostenbeiträgen zusammengesetzt ist, wobei wenigstens einer der Beiträge eine ökologische Kenngröße ist. Unter "Kostenbeiträgen" sollen also hier nicht nur monetäre Kosten, sondern auch ökologische Kosten, soziale Kosten und ggf. andere schädliche Effekte verstanden werden, die während des Produktlebenszyklus auftreten. Wenn mehrere solche Beiträge in die Optimierungsfunktion eingehen, kann ihr relatives Gewicht über Gewichtungsfaktoren festgelegt werden. Neben diesen eigentlichen Kostenbeiträgen (die zusammen eine Kostenfunktion ergeben) kann die übergeordnete Optimierungsfunktion auch optional noch zusätzliche (positive und/oder negative) Korrekturterme enthalten, um noch weitere Aspekte beim Vergleich der verschiedenen Handlungsoptionen zu berücksichtigen.

In Schritt d) findet eine computergestützte Berechnung eines Vorhersagewerts der Optimierungsfunktion für die jeweils betrachtete Handlungsoption statt. Hierbei werden die Lebenszyklusdaten der in Schritt a) bereitgestellten Datenbank verwendet. Zusätzlich zu den realen Nutzungsdaten des betrachteten ersten Produkts und/oder realer Nutzungsdaten weiterer Produkte, deren Lebenszyklus bereits in der Vergangenheit liegt, kann bei der Berechnung auch ein Simulationsmodell zum Einsatz kommen, mit welchem Lebenszyklusdaten (und die damit verknüpften Kostenbeiträge) für das erste Produkt für nachfolgende Zeiträume vorhergesagt werden können. Gegebenenfalls kann mit einem solchen Simulationsmodell auch eine entsprechende Vorhersage für ein Ersatzprodukt und/oder ein modifiziertes erstes Produkt getroffen werden.

In Schritt e) wird diejenige Handlungsoption ausgewählt, für die der niedrigste Vorhersagewert der Optimierungsfunktion erhalten wurde. So kann insbesondere diejenige Handlungsoption mit den niedrigsten "Gesamtkosten" (unter entsprechender Gewichtung von monetären, ökologischen und/oder sozialen Kostenbeiträgen) ausgewählt werden. Optional kann dabei auch das Einhalten einer Randbedingung gefordert werden, so dass z.B. Handlungsoptionen ausgeschlossen werden, bei denen die übergeordnete Optimierungsfunktion zwar vergleichsweise niedrig ausfällt, bei denen aber ein bestimmter Wert in einen verbotenen Bereich fällt. So kann z.B. ein modifiziertes Ersatzprodukt, bei dessen Herstellung ein gesetzlich verbotener Gefahrstoff zum Einsatz kommt oder ein Produkt, welches unter Einsatz von Kinderarbeit hergestellt wird, bei der Entscheidung ausgeschlossen werden. In analoger Weise kann das Überschreiten bestimmter Schwellwerte bei einzelnen ökologischen Kenngrößen hier verboten werden.

Ein wesentlicher Vorteil des erfindungsgemäßen Verfahrens liegt darin, dass mit dem beschriebenen Vorgehen eine reproduzierbare und auf quantitativen Werten beruhende Entscheidungsfindung erreicht wird. Die übergeordnete Optimierungsfunktion stellt hierfür ein einheitliches Kriterium dar. Dadurch, dass zumindest eine ökologische Kenngröße in die Optimierungsfunktion eingeht, wird erreicht, dass die Entscheidungsfindung zumindest anteilig von Nachhaltigkeits-Gesichtspunkten beeinflusst wird. Wie stark dieser Einfluss im Verhältnis zu den optional berücksichtigten monetären Gesichtspunkten ist, kann durch geeignete Wahl der Gewichtungsfaktoren festgelegt werden.

Das erfindungsgemäße Computerprogrammprodukt umfasst Befehle, wobei die Befehle bei der Ausführung des Computerprogrammprodukts auf einem Computer diesen dazu veranlassen, das erfindungsgemäße Verfahren auszuführen. Die Vorteile des erfindungsgemäßen Computerprogrammprodukts ergeben sich analog zu den oben beschriebenen Vorteilen des erfindungsgemäßen Verfahrens.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Verfahrens auch bei dem Computerprogrammprodukt realisiert werden.

So kann die in Schritt d) durchgeführte Berechnung vorteilhaft im Anschluss an ein auslösendes Ereignis erfolgen, wobei das auslösende Ereignis beispielsweise ein Ausfall des Produkts oder ein Erreichen einer vorgegebenen Betriebsdauer des Produkts oder eine Erfassung eines Messwerts einer physikalischen Kenngröße des Produkts ist, wobei der erhaltene Messwert ein Indikator für ein nahendes Ende der Produktlebensdauer ist. Mit anderen Worten wird die Entscheidungsfindung zur Weiternutzung des Produkts erst dann in die Wege geleitet, wenn sich ein akuter Anlass dafür ergibt, einen Verwurf des Produkts und den Ersatz durch ein neues Produkt als Option in Betracht zu ziehen. Die zu betrachtende Zeitspanne kann insbesondere mit oder nach dem auslösenden Ereignis beginnen, da sich erst nach diesem Ereignis die zur Verfügung stehenden Handlungsoptionen unterscheiden.

Allgemein vorteilhaft kann die erste Handlungsoption eine Änderung der Funktionalität des weiterzuverwendenden ersten Produkts beinhalten. Alternativ oder zusätzlich kann die zweite Handlungsoption eine Inbetriebnahme eines zweiten Produkts mit einer geänderten Funktionalität beinhalten. Es wird also zumindest bei einer der in Betracht gezogenen Handlungsoptionen eine Änderung der Funktionalität des in Zukunft benutzten Produkts berücksichtigt. Dies kann eine Einschränkung und/oder eine Erweiterung von einer oder mehreren Funktionalitäten sein. Allgemein vorteilhaft können insgesamt auch mehr als zwei Handlungsoptionen berücksichtigt werden, wobei dann zwischen den einzelnen Optionen die Funktionalität des in Zukunft verwendeten Produkts variiert wird. Wenn bei der Betrachtung eine geänderte Funktionalität des Ersatzprodukts berücksichtigt wird, so kann dieses zweite Produkt einem zweiten Produkttyp angehören. Es kann sich also um ein unterschiedliches Produkt handeln. Alternativ kann es aber auch ebenfalls dem ersten Produkttyp angehören, und die Funktionalität kann durch eine Änderung der Konfiguration des Produkts eingeschränkt und/oder erweitert sein.

Besonders vorteilhaft kann bei dieser Ausführungsform die betrachtete Änderung der Funktionalität aus realen Daten über die vergangene Nutzung des Produkts (also insbesondere aus Daten vor dem auslösenden Ereignis) abgeleitet sein. So kann z.B. eine Funktionalität, die in der Vergangenheit gar nicht oder nur wenig benutzt wurde, für die Zukunft eingeschränkt oder deaktiviert werden. Alternativ oder zusätzlich kann für einen bestimmten Typ von Funktionalität, auf den in der Vergangenheit häufig zugegriffen wurde, dieser für die Zukunft noch durch ein oder mehrere Funktionalitäten desselben Typs erweitert werden.

Besonders vorteilhaft ist es im Zusammenhang mit dieser Ausführungsform, wenn die jeweilige Änderung der Funktionalität zu einer Änderung des Vorhersagewerts für die wenigstens eine ökologische Kenngröße führt. So kann beispielsweise eine Einschränkung einer bestimmten Funktionalität zu einer verlängerten Lebensdauer und/oder einem geringeren Energieverbrauch des in Zukunft verwendeten Produkts führen. Oder es sind andere Beispiele denkbar, bei dem eine Erweiterung der Funktionalität zu Energie- und/oder Materialeinsparungen beim Betrieb des Produkts führen können. Die geänderte Funktionalität kann also insbesondere Auswirkungen auf ein oder mehrere ökologische und/oder monetäre Kostenbeiträge in der übergeordneten Optimierungsfunktion haben. Die Berücksichtigung von solchen Funktionsanpassungen in der Betrachtung kann daher zu verbesserten Entscheidungen führen und insbesondere zu einer Verringerung der insgesamt verursachten ökologischen Kosten.

Alternativ oder zusätzlich zu der beschriebenen Abhängigkeit der Kostenbeiträge von der Funktionalität des Produkts kann die Änderung der Funktionalität auch durch einen Zusatzterm in der Optimierungsfunktion berücksichtigt werden. Bei einem solchen Zusatzterm muss es sich insbesondere nicht um einen Kostenbeitrag im engeren Sinne handeln (also z.B. nicht um ökologische, monetäre oder soziale Kosten), sondern kann sich auch um einen Strafterm (Malus) oder einen Belohnungsterm (Bonus) handeln. So kann beispielsweise eine unerwünschte Ausfallzeit, welche sich nicht nachteilig in den eigentlichen Kostenbeiträgen niederschlägt, durch einen mit positivem Vorzeichen eingehenden Malus in der übergeordneten Optimierungsfunktion berücksichtigt werden. In ähnlicher Weise kann ein mit negativem Vorzeichen eingehender Bonus für eine erhöhte Kundenzufriedenheit aufgrund einer erwünschten zusätzlichen Funktionalität berücksichtigt werden. Oder es kann ein entsprechender Malus für den Wegfall einer Funktionalität einfließen, z.B. wenn dieser Wegfall zwar ökologische Vorteile hat, aber die Zufriedenheit des Nutzers beeinträchtigt. So können über die Gewichtungsfaktoren der einzelnen Beiträge der Optimierungsfunktion diese unterschiedlichen Gesichtspunkte mit einer reproduzierbaren Priorisierung berücksichtigt werden.

Gemäß einer allgemein besonders vorteilhaften Ausführungsform kann die in Schritt a) bereitgestellte Datenbank reale Nutzungsdaten des ersten Produkts enthalten, welche von dem ersten Produkt erfasst worden sind. Diese Erfassung kann insbesondere in der Erstnutzungsphase erfolgen, also in der Nutzungsphase bis zum dem oben beschriebenen auslösenden Ereignis. Hierzu kann das erste Produkt mit Mitteln zur Erfassung eines Nutzungszustands ausgestattet sein und insbesondere auch mit Mitteln zur Übertragung der erfassten Daten an die Datenbank. Alternativ zu einer solchen Übertragung kann die Datenbank aber auch in das erste Produkt integriert sein, wobei optional auch die computergestützte Berechnung in Schritt d) innerhalb des Produkts, in einer dort integrierten Berechnungsvorrichtung erfolgen kann. Alternativ können die Datenbank und/oder die Berechnungsvorrichtung aber auch außerhalb des Produkts lokalisiert sein.

Die beschriebenen realen Nutzungsdaten können insbesondere Daten über die Art der bisherigen Verwendung des Produkts umfassen (Bedienungsdaten), also beispielsweise die Anzahl und Dauer der bisherigen Betriebsphasen und die dabei eingesetzten Betriebsmodi. Solche Informationen können insbesondere bei einem Produkt mit elektrischer und/oder elektronischer Funktionalität innerhalb des Produkts erfasst und gegebenenfalls gespeichert werden. Mit anderen Worten wird ein elektronisches Betriebsprotokoll geführt. Abhängig von solchen Nutzungsdaten können bei dem Vergleich der Handlungsoptionen auch günstige Optionen mit geänderter Funktionalität in Betracht gezogen werden, welche an den bisherigen Betriebsverlauf angepasst sind.

Zusätzlich zu solchen Bedienungsdaten können die realen Nutzungsdaten auch weitere Daten zur Zustandsüberwachung des Produkts umfassen. So werden beispielsweise beim sogenannten "Condition Monitoring" Zustandsdaten von Maschinen durch die regelmäßige Messung von physikalischen Größen erfasst, welche Rückschlüsse auf einen Gesundheitszustand der Maschine ermöglichen. Diese Zustandsdaten können insbesondere durch einen oder mehrere Sensoren erfasst werden, welche nahe bei dem Produkt angebracht sind und/oder in das Produkt integriert sein können. So können hier zum Beispiel Temperatur- oder Schwingungs- bzw. Geräuschsensoren zur Überwachung des Produktzustands zum Einsatz kommen. Aus solchen Daten können insbesondere Rückschlüsse darüber gewonnen werden, welche Betriebszustände zu starken Belastungen des Produkts geführt haben und welche daher im Hinblick auf eine Lebensdauermaximierung in zukünftigen Betriebsphasen vermieden oder zumindest verringert werden sollten. Die Berücksichtigung solcher Aspekte bei der Entscheidungsfindung ermöglicht daher eine noch stärkere Verbesserung der Nachhaltigkeit im ProduktLebenszyklus.

Bei der Ausführungsform mit der Erfassung von realen Nutzungsdaten ist es allgemein besonders vorteilhaft, wenn die Berechnung des Vorhersagewerts in Schritt d) auf der Grundlage eines Simulationsmodells unter Berücksichtigung dieser realen Nutzungsdaten des ersten Produkts erfolgt. Die Verwendung eines Simulationsmodells ist in diesem Schritt nicht zwingend, da alternativ auch auf statistische Daten aus anderen Produkten dieses Produkttyps zurückgegriffen werden kann, um relevante Werte wie zum Beispiel die verbleibende Lebensdauer und einen zukünftigen Energieverbrauch beim Betrieb des Produkts zu prognostizieren. Wenn aber bereits reale Nutzungsdaten des betrachteten Produkt-Individuums vorliegen, können diese besonders vorteilhaft dazu genutzt werden, eine genauere Vorhersage mittels einer Simulation zu treffen, in welche die speziellen Stärken und Schwächen des betrachteten Produkt-Individuums und/oder die besonderen Umstände und Anforderungen des relevanten Nutzers bzw. der Betriebssituation mittels der vorhandenen realen Nutzungsdaten einfließen können. Das Simulationsmodell kann dann also insbesondere dazu genutzt werden, die relevanten Beiträge der Optimierungsfunktion für das erste Produkt in seiner zukünftigen Nutzungsphase - also nach dem auslösenden Ereignis - vorherzusagen.

Alternativ oder zusätzlich zu der Erfassung von Realdaten für das erste Produkt kann die in Schritt a) bereitgestellte Datenbank statistische Lebenszyklusdaten für eine Vielzahl von Produkten des ersten übergeordneten Produkttyps umfassen. Somit können Vorhersagen über zukünftige Eigenschaften des ersten Produkts und/oder eines potentiellen Ersatzprodukts basierend auf statistischen Erfahrungswerten getroffen werden, was ebenfalls die Berechnung eines Vorhersagewerts der Optimierungsfunktion ermöglicht. Eine solche Datenbank kann insbesondere durch eine Vielzahl von im Betrieb befindlichen Produkten kontinuierlich und automatisiert befüllt werden. Besonders zweckmäßig kann der Hersteller und/oder Vertreiber der Produkte eine solche Datenbank aufrechterhalten. Alternativ kann aber auch der Nutzer der Produkte eine solche Datenbank vorhalten, insbesondere wenn er eine Vielzahl gleicher oder ähnlicher Produkte einsetzt. So kann die Datenbank allgemein neben Daten zu Produkten des ersten Produkttyps auch statistische Daten zu ähnlichen weiteren Produkttypen umfassen. Die kontinuierliche Befüllung der Datenbank kann insbesondere durch eine drahtlose Übertragungsschnittstelle zwischen den einzelnen Produkten und der Datenbank erfolgen. Auch hier können neben den sogenannten Bedienungsdaten optional auch zusätzliche Daten zum "Condition Monitoring" für die Vielzahl von Produkten erfasst werden.

Allgemein können bei der Ausführungsform, bei der die Datenbank statistische Lebenszyklusdaten für eine Vielzahl von Produkten enthält, die folgenden Arten von Daten umfasst sein:

- Daten über die bei der Herstellung der Produkte eingesetzte Energie,
- Daten über die bei der Herstellung der Produkte eingesetzten Materialien,
- Daten über die beim Betrieb der Produkte eingesetzte Energie,
- Daten über die beim Betrieb der Produkte eingesetzten Materialien,
- Daten über die beim Betrieb der Produkte freigesetzte Energie,
- Daten über die beim Betrieb der Produkte freigesetzten Materialien,
- Daten über die Nutzungsdauer der Produkte,
- Daten über die Recyclingquote der Produkte,
- Daten über die bei der Entsorgung oder beim Recycling der Produkte eingesetzte oder freigesetzte Energie,

- Daten über die bei der Entsorgung oder beim Recycling der Produkte eingesetzten Materialien,
- Daten über die bei der Entsorgung oder beim Recycling der Produkte an die Umwelt freigesetzten Materialien,
- Daten über die beim Recycling der Produkte rückgewonnenen Materialien und/oder
- Daten über weitere Umweltbelastungen beim Betrieb, der Entsorgung und/oder des Recyclings der Produkte.

Neben dem beschriebenen ersten Produkttyp (zu dem das erste Produkt gehört) können dabei auch die entsprechenden Daten zu anderen Produkttypen vorgehalten werden, welche bei der Wahl eines Ersatzprodukts als Alternativen in Frage kommen.

Allgemein vorteilhaft und unabhängig von der Art der Berechnung der Vorhersagewerte kann die wenigstens eine ökologische Kenngröße ein Energieeinsatz, ein Wasserverbrauch, ein anderer Materialverbrauch, ein $CO_2$-Ausstoß, ein Ausstoß eines anderen klimawirksamen Gases, ein Ozonausstoß, eine Freisetzung einer Säure, eine Freisetzung eines Giftstoffs und/oder eine Freisetzung eines anderen umweltschädlichen oder gesundheitsschädlichen Stoffs sein. Unter einem klimawirksamen Gas wird dabei insbesondere ein Treibhausgas verstanden, das aufgrund des Treibhauseffekts zur Erderwärmung beiträgt. Es können auch mehrere der genannten ökologischen Kenngrößen in Form von ökologischen Kostenbeiträgen in der übergeordneten Optimierungsfunktion berücksichtigt werden. Dabei wird die jeweilige Kenngröße über die gesamte betrachtete Zeitspanne kumulativ betrachtet. Z.B. kann also ein kumulierter $CO_2$-Fußabdruck des Produkts während der betrachteten Betriebsphase und gegebenenfalls auch während der Herstellung, der Reparatur und/oder der Entsorgung bzw. des Recyclings Eingang in die übergeordnete Optimierungsfunktion finden. Alternativ oder zusätzlich zu dem ökologischen Kostenanteil können auch monetäre und/oder soziale Kenngrößen als weitere Kostenbeiträge in der Optimierungsfunktion enthalten sein. Monetäre Kenngrößen können neben Herstellungskosten und laufenden Betriebskosten auch die Kapitalbindung in Form von benötigten Investitionen oder der Wertverlust des Produkts selbst oder der für Herstellung bzw. Entsorgung benötigten Geräte sein. Eine soziale Kenngröße kann beispielsweise der Einsatz von Kinderarbeit oder Zwangsarbeit oder sonstiger Arbeit bei unzumutbaren Bedingungen bei der Herstellung des betrachteten Produkts sein.

Allgemein vorteilhaft kann die wenigstens eine ökologische Kenngröße, die in die übergeordnete Optimierungsfunktion einfließt, ein physikalisch messbarer Wert sein. So ist zum Beispiel ein $CO_2$-Ausstoß ein physikalisch messbarer Wert. Die Verwendung solcher messbaren Werte erleichtert die quantitative Betrachtung und ermöglicht so insgesamt eine reproduzierbare Entscheidungsfindung. Es können auch mehrere ökologische Kenngrößen in der Optimierungsfunktion enthalten sein, welche besonders vorteilhaft alle auf quantitativ messbaren Werten beruhen. Besonders vorteilhaft sind alle in der Optimierungsfunktion enthaltenen Kostenbeiträge zumindest objektiv quantifizierbar (z.B. auch ein Kostenbeitrag in Euro).

Gemäß einer allgemein vorteilhaften Ausführungsform kann die übergeordnete Optimierungsfunktion mehrere ökologische und/oder ökonomische Kenngrößen als Kostenbeiträge enthalten, welche jeweils mit Gewichtungsfaktoren in die übergeordnete Kostenfunktion eingehen. Durch die Gewichtungsfaktoren kann somit eine Priorisierung der verschiedenen Kriterien (z.B. ökologische gegenüber monetären Kriterien) festgelegt werden. Auch wenn die einzelnen Kostenbeiträge unterschiedliche Einheiten aufweisen (z.B. Kosten in Euro vs. $CO_2$-Ausstoß), so können die Gewichtungsfaktoren die verschiedenen Beiträge auf eine gemeinsame Größenskala bringen, indem die Faktoren ihrerseits mit unterschiedlichen Einheiten behaftet sind. So kann vorteilhaft ein eindimensionaler Bewertungsmaßstab in Form der übergeordneten Optimierungsfunktion bei der Entscheidungsfindung zum Einsatz kommen.

Bei einer ersten Variante der Ausführungsform mit Gewichtungsfaktoren für die einzelnen Kenngrößen können die Gewichtungsfaktoren einmal festgelegt werden und dann für verschiedene zu treffende Entscheidungen konstant gehalten werden. So kann ein einheitlicher Bewertungsmaßstab bei Entscheidungen über die Weiterverwendung ähnlicher Produkte gewährleistet werden. Insbesondere kann so erzwungen werden, dass bei der Entscheidungsfindung auch ökologische Aspekte eine ausreichende Berücksichtigung erfahren.

Alternativ können bei dieser Ausführungsform die Gewichtungsfaktoren aber auch durch eine Benutzereingabe angepasst werden. So kann der Endnutzer beispielsweise selbst mit beeinflussen, wie hoch er ökologische Aspekte im Verhältnis zu monetären Aspekten priorisieren will. Dabei können dem Benutzer gegebenenfalls auch Schranken vorgegeben werden, so dass z.B. die Gewichtungsfaktoren für die jeweils betrachteten ökologischen Kenngrößen bestimmte Schwellwerte nicht unterschreiten dürfen, damit der Aspekt der Produkt-Nachhaltigkeit eine angemessene Berücksichtigung erfährt. Durch eine entsprechende Benutzereingabe kann auch die Priorisierung der oben beschriebenen Bonus- oder Malus-Terme zur Berücksichtigung von Ausfallszeiten oder geänderten Funktionalitäten geeignet gewählt werden.

Gemäß einer ersten Ausführungsvariante für die zu betrachtende Zeitspanne kann diese so lang gewählt sein, dass bei der ersten Handlungsoption das zu erwartende Ende der Nutzungsdauer des ersten Produkts in der Zeitspanne enthalten ist. Zweckmäßig ist die Zeitspanne dann auch so lang gewählt, dass bei der zweiten Handlungsoption, wenn sie die Inbetriebnahme eines zweiten Produkts als Ersatzprodukt beinhaltet, das zu erwartende Ende der Nutzungsdauer des zweiten Produkts ebenfalls enthalten ist. So wird mit anderen Worten ein Vergleich von Lebenszyklusdaten über die verbleibende Produkt-Lebensdauer sowohl für die Weiternutzung des ersten Produkts als auch für die Inbetriebnahme eines Ersatzprodukts durchgeführt. Dieser Vergleich schließt dann auch eine Betrachtung der Entsorgungs- bzw. Recyclingschritte für die jeweiligen Produkte mit ein. Die Wahl einer solchen langen Zeitspanne ist vor allem dann sinnvoll, wenn das erste Produkt und das in Frage kommende Ersatzprodukt so unterschiedlich sind, dass die (ökologischen und/oder monetären) Kostenbeiträge bei der Entsorgung bzw. beim Recycling sich stark unterscheiden und diese Unterschiede in die Entscheidung mit einfließen sollen.

Gemäß einer zweiten Ausführungsvariante für die zu betrachtende Zeitspanne kann diese so kurz gewählt sein, dass bei der ersten Handlungsoption das zu erwartende Ende der Nutzungsdauer des ersten Produkts außerhalb der Zeitspanne liegt. Zweckmäßig ist die Zeitspanne dann auch so kurz gewählt, dass bei der zweiten Handlungsoption, wenn sie die Inbetriebnahme eines zweiten Produkts als Ersatzprodukt beinhaltet, das zu erwartende Ende der Nutzungsdauer des zweiten Produkts ebenfalls außerhalb der Zeitspanne liegt. Die Wahl einer solchen kurzen Zeitspanne ist vor allem dann sinnvoll, wenn das erste Produkt und das in Frage kommende Ersatzprodukt sich so ähnlich sind, dass die (ökologischen und/oder monetären) Kostenbeiträge bei der Entsorgung bzw. beim Recycling sich nicht sehr stark unterscheiden und diese Unterschiede entsprechend nicht mit in die Entscheidung einfließen müssen.

Allgemein vorteilhaft kann die Berechnung in Schritt d) durch ein lernendes System erfolgen, bei dem Methoden der künstlichen Intelligenz zum Einsatz kommen, insbesondere maschinelles Lernen mit einem neuronalen Netz. Dieses lernende System kann insbesondere dazu genutzt werden, um Zusammenhänge zwischen statistischen Lebenszyklusdaten in der Datenbank zu erkennen. Hierzu kann besonders vorteilhaft ein strukturiertes Datenmodell für die Lebenszyklusdaten in der Datenbank verwendet werden. Dabei können insbesondere Ontologien zum Einsatz kommen, um die Zusammenhänge zwischen den einzelnen Lebenszyklusdaten zu strukturieren. Ganz besonders vorteilhaft kann es sich bei der Datenbank mit den Lebenszyklusdaten um eine Graphdatenbank handeln, und/oder die computergestützte Berechnung in Schritt d) kann mit Hilfe eines graphenbasierten Algorithmus erfolgen. Solche graphenbasierten Methoden sind im Zusammenspiel mit der vorliegenden Erfindung besonders zweckmäßig, da es sich bei statistischen Lebenszyklusdaten um stark vernetzte Informationen handelt, wobei die Erkennung und Nutzung von Abhängigkeiten zwischen den Einzeldaten besonders nützlich sein kann, um gute Entscheidungen über die Produkt-Weiterverwendung zu treffen. So kann zum Beispiel die Erkenntnis, dass eine bestimmte Änderung der Produktfunktionalität zu einer starken Erhöhung der erwarteten Lebensdauer beitragen kann, zu der Entscheidung führen, das erste Produkt unter Abänderung der Funktionalität weiter zu nutzen oder aber ein Ersatzprodukt mit geänderter Funktionalität in Betrieb zu nehmen. Im Zusammenspiel mit einer stärkeren Berücksichtigung von ökologischen Kostenbeiträgen kann dieses Vorgehen zu nachhaltigeren Entscheidungen bei der Produkt-Nutzung führen.

Allgemein vorteilhaft und unabhängig von der genauen Vorgehensweise bei der Entscheidungsfindung kann es sich bei dem ersten Produkt um ein industriell hergestelltes technisches Produkt und dabei insbesondere um eine Maschine handeln. Im Zusammenhang mit solchen Maschinen kommen die Vorteile der Erfindung besonders zum Tragen, denn hier besteht viel Potential, um ökologische Belastungen zu verringern, wenn nicht bei jedem Nutzungsausfall eine neue Maschine in Betrieb genommen wird, sondern vermehrt Entscheidungen zugunsten einer Reparatur und Weiternutzung getroffen werden. Dies kann durch die beschriebene Berücksichtigung des wenigstens einen ökologischen Kostenbeitrags erreicht werden. Besonders vorteilhaft handelt es sich um eine Maschine mit einer elektronischen Funktionalität. Eine solche Maschine ist dafür geeignet, bei ihrem Betrieb reale Nutzungsdaten zu erfassen und in der in Schritt a) bereitgestellten Datenbank zu hinterlegen.

Nachfolgend wird die Erfindung anhand einiger bevorzugter Ausführungsbeispiele unter Bezugnahme auf die angehängten Zeichnungen beschrieben, in denen:

Figur 1    eine schematische Darstellung von zwei bei der Entscheidungsfindung zu berücksichtigenden Handlungsoptionen zeigt,

Figur 2    einen ähnlichen Vergleich mit einem unterschiedlichen zu betrachteten Zeitraum zeigt und

Figur 3    ein Ablaufdiagramm für ein Ausführungsbeispiel des Verfahrens zeigt.

In den Figuren sind gleiche oder funktionsgleiche Elemente mit gleichen Bezugszeichen versehen.

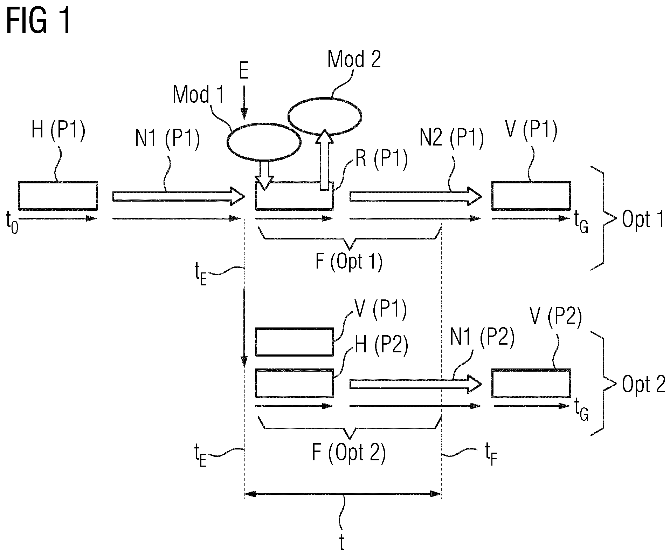

In Figur 1 ist eine schematische Darstellung von zwei Handlungsoptionen Opt1 und Opt2 gezeigt, zwischen denen im Rahmen des erfindungsgemäßen Verfahrens eine Entscheidung getroffen wird. Diese beiden Handlungsoptionen ergeben sich innerhalb des Lebenszyklus eines ersten Produkts P1, welches insbesondere eine Maschine oder ein sonstiges technisches Produkt sein kann. Beispielsweise kann es sich bei dem Produkt P1 um ein Kraftfahrzeug, um eine industrielle Fertigungsmaschine oder um eine Waschmaschine handeln. Der Zeitstrahl der Betrachtung beginnt im linken Teil der Figur bei einem Startzeitpunkt $t_0$, bei dem die Herstellung H des Produkts P1 eingeleitet wird. Im Anschluss an diesen Herstellungsschritt H(P1) folgt die erste Nutzungsphase N1 des ersten Produkts P1. Zum Ende dieser ersten Nutzungsphase N1(P1) tritt in diesem Beispiel zum Zeitpunkt $t_E$ ein auslösendes Ereignis E ein, welches beispielsweise ein Betriebsausfall des ersten Produkts P1 sein kann.

Im Anschluss an das auslösende Ereignis E stehen mehrere Handlungsoptionen zur Verfügung, mit denen auf das Ereignis E reagiert werden kann und zwischen denen eine Entscheidung getroffen werden muss. Nur beispielhaft sind hier zwei Handlungsoptionen Opt1 und Opt2 gezeigt, von denen die erste Handlungsoption eine Reparatur R(P1) und eine Weiterverwendung des ersten Produkts in einer zweiten Nutzungsphase N2(P1) beinhaltet. Am Ende dieser ersten Handlungsoption Op1 steht der Verwurf V des ersten Produkts, also eine Außerbetriebnahme, die insbesondere mit der Entsorgung bzw. dem Recycling des ersten Produkts P1 verbunden ist. Rein optional kann die erste Handlungsoption Opt1 im Zuge der Reparatur R auch eine Modifikation des ersten Produkts P1 umfassen, wobei Mod1 hier beispielhaft für eine Erweiterung der Funktionalität und Mod2 für eine Einschränkung der Funktionalität steht. Diese beiden Handlungsoptionen Optl, Opt2 können auch miteinander kombiniert werden, so dass z.B. eine bestimmte Funktionalität erweitert wird und eine andere eingeschränkt wird. Durch diese möglichen Veränderungen werden insbesondere noch weitere Handlungsoptionen eröffnet, welche hier nur der Einfachheit halber nicht als separate Handlungsstränge dargestellt sind, die aber ebenfalls in dem erfindungsgemäßen Verfahren bei der Entscheidungsfindung berücksichtigt werden können.

Die alternative, zweite Handlungsoption Opt2 beinhaltet den Verwurf V des ersten Produkts P1, verbunden mit der Inbetriebnahme eines zweiten Produkts P2 als Ersatzprodukt. Die Herstellung H des Ersatzprodukts P2 ist hier der Einfachheit halber in den Zeitraum nach dem Ereignis E gelegt worden, auch wenn tatsächlich die Herstellung schon früher erfolgt sein kann, wenn z.B. das zweite Produkt P2 schon als Ersatzprodukt auf Lager liegt. Die fiktive Betrachtung der Herstellung H(P2) soll nur bewirken, dass die Kostenbeiträge, die zur Herstellung gehören, beim Vergleich der Handlungsoptionen Optl, Opt2 mit betrachtet werden. Anschließend folgt eine erste Nutzungsphase N1 des Ersatzprodukts P2. Ähnlich wie beim ersten Produkt P1 wird die Lebensdauer dieses Ersatzprodukts P2 durch dessen Verwurf V(P2) beendet. Nur der Einfachheit halber fällt in dieser Darstellung das Ende der Produktlebensdauer $t_G$ für das erste Produkt P1 bei der ersten Handlungsoption Opt1 und für das zweite Produkt P2 bei der zweiten Handlungsoption Opt2 zusammen. Bei realistischen Vergleichsszenarien können hier durchaus Unterschiede bestehen, z.B. wenn die Lebensdauer des neuen Ersatzprodukts P2 länger ist als die zweite Nutzungsphase N2 des reparierten ersten Produkts P1.

Im Rahmen des erfindungsgemäßen Verfahrens wird die Entscheidung zwischen den Handlungsoptionen Optl, Opt2 aufgrund von Vorhersagewerten einer übergeordneten Optimierungsfunktion F für die jeweilige Handlungsoption Optl, Opt2 getroffen. Dabei ist F(Optl) der Vorhersagewert für die Handlungsoption Optl, und F(Opt2) ist der Vorhersagewert für die Handlungsoption Opt2. Die Optimierungsfunktion F kann beispielsweise eine sogenannte Kostenfunktion sein, welche ein oder mehrere ökologische Kostenbeiträge sowie ein oder mehrere monetäre Kostenbeiträge beinhaltet. Zusätzlich können optional auch soziale Kostenbeiträge enthalten sein. Die einzelnen Kostenbeiträge können insbesondere mit zugehörigen Gewichtungsfaktoren in die Gesamtsumme der Optimierungsfunktion F eingehen. Die Optimierungsfunktion F kann also insbesondere wie folgt zusammengesetzt sein:

$$F = g_{e1}C_{e1} + g_{e2}C_{e2} + ... + g_mC_m + ... + (g_KK) \qquad (1)$$

wobei $C_{e1}$ einen ersten ökologischen Kostenbeitrag (beispielsweise einen CO2-Ausstoß) und $C_{e2}$ einen zweiten ökologischen Kostenbeitrag (beispielsweise einen Materialverbrauch) darstellt und $g_{e1}$ und $g_{e2}$ die zugehörigen Gewichtungsfaktoren sind. $C_m$ stellt entsprechend einen monetären Kostenbeitrag und $g_m$ den zugehörigen Gewichtungsfaktor dar. Wie durch die Punkte angedeutet ist, können weitere ökologische, monetäre oder auch soziale Kostenbeiträge hinzukommen. Optional können auch zusätzliche Bonus- oder Malus-Terme in einem fakultativen Korrekturterm K enthalten sein, beispielsweise um Ausfallzeiten zu "bestrafen" oder eine erhöhte Kundenzufriedenheit zu "belohnen". Dieser Korrekturterm K ist ebenfalls mit einem entsprechenden Gewichtungsfaktor $g_K$ versehen. Er kann positiv oder negativ sein.

Bei der Berechnung der Vorhersagewerte für die Optimierungsfunktion F findet eine kumulierte Betrachtung über eine vorgegebene Zeitspanne statt. Beim Beispiel der Figur 1 ist dies die Zeitspanne t, die zum Zeitpunkt $t_E$ des auslösenden Ereignisses beginnt und zum Zeitpunkt $t_F$ endet. Beim Beispiel der Figur 1 ist diese Zeitspanne t vergleichsweise kurz gewählt und schließt das Ende der Produktlebensdauer $t_G$ für die Handlungsoptionen Optl, Opt2 nicht mit ein. Eine solche kurze Betrachtungs-Zeitspanne t ist zweckmäßig, wenn bei dem Verwurf und der Entsorgung der beiden Produkte P1,P2 keine großen Unterschiede in den ökologischen und ökonomischen Kostenbeiträgen zu erwarten sind. Innerhalb der betrachteten Zeitspanne t werden bei der Berechnung die relevanten Kostenbeiträge (ggf. unter Berücksichtigung ihrer Gewichtungsfaktoren) zeitlich aufsummiert, also kumulativ betrachtet. Entsprechend wird ein Vorhersagewert F(Optl) berechnet, welcher die Kostenbeiträge für die Reparatur R und einen Teil der zweiten Nutzungsphase N2(P1) einschließt. Dieser wird verglichen mit dem Vorhersagewert F(Opt2), welcher die Kostenbeiträge für den Verwurf des ersten Produkts V(P1), die Herstellung des zweiten Produkts H(P2) - selbst wenn diese tatsächlich außerhalb des Zeitraums t erfolgt - und einen Teil der Nutzungsphase N1(P2) des zweiten Produkts P2 einschließt. Im Folgenden wird ein Vergleich dieser beiden Vorhersagewerte getroffen, und es findet eine Entscheidung zugunsten derjenigen Handlungsoption Optl, Opt2 statt, welche mit einem niedrigeren Vorhersagewert für F verknüpft ist.

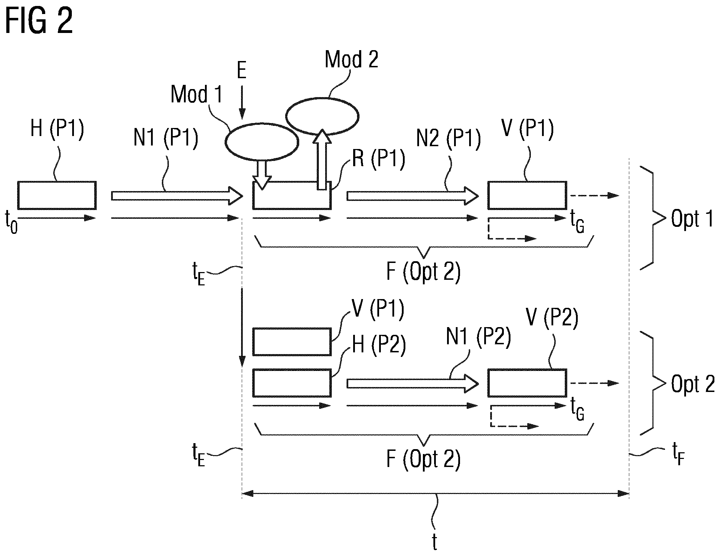

Figur 2 zeigt einen ähnlichen Vergleich zweier Handlungsoptionen Optl, Opt2 auf der Grundlage von berechneten Vorhersagewerten für die Optimierungsfunktion F. Im Unterschied zum vorhergehenden Beispiel wurde hier jedoch eine längere zu betrachtende Zeitspanne t gewählt, welche über das Ende $t_G$ der jeweiligen Produktlebensdauer hinausragt. Entsprechend werden bei der Vorhersage von F die Kostenbeiträge über einen längeren Zeitraum kumuliert, und es werden auch z.B. die ökologischen und monetären Kosten für die Außerbetriebsetzung und die Entsorgung bzw. das Recycling des jeweils zuletzt benutzten Produkts berücksichtigt. Diese Vorgehensweise ist dann zweckmäßig, wenn sich die damit verbundenen Kostenbeiträge für die beiden Produkte P1 und P2 stark unterscheiden. Im rechten Teil der Figur 2 sind für jede der beiden Handlungsoptionen Optl, Opt2 noch zusätzliche gestrichelte Pfeile eingezeichnet. Dies soll andeuten, dass sich zum Ende der Nutzungsphase des jeweiligen Produkts noch einmal eine ähnliche Verzweigung auftut wie nach dem Ereignis E. Insgesamt kann also auch hier noch einmal zwischen einer Weiterverwendung und dem Ausweichen auf ein Ersatzprodukt entschieden werden, was die Gesamtzahl der zur Verfügung stehenden Handlungsoptionen erhöht.

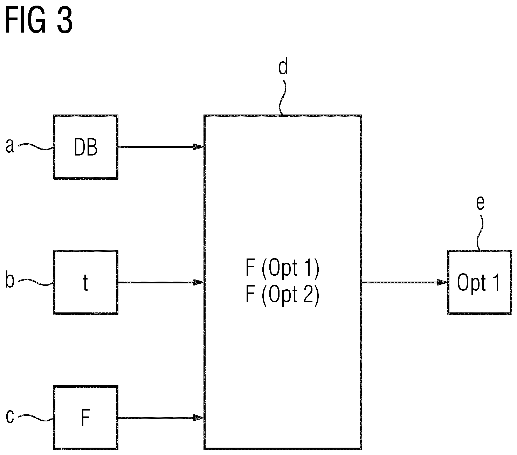

Figur 3 zeigt ein Ablaufdiagramm für ein Ausführungsbeispiel des Verfahrens. Das Verfahren dient zur Entscheidung zwischen zwei oder mehr Handlungsoptionen im Zusammenhang mit der weiteren Nutzung eines Produkts, ähnlich wie dies für die Figuren 1 und 2 am Beispiel einer ausgefallenen Maschine beschrieben worden ist. Um eine Entscheidung zwischen den betrachteten Handlungsoptionen Optl, Opt2 herbeizuführen, wird zunächst in einem Schritt a) eine Datenbank DB mit Lebenszyklusdaten des zugehörigen Produkttyps (und optional auch weiterer ähnlicher Produkttypen) bereitgestellt. Diese Datenbank kann statistische Lebenszyklusdaten aus einer Vielzahl solcher Produkte enthalten. Alternativ oder zusätzlich kann sie Realdaten des konkret betroffenen ersten Produkts P1 enthalten. In einem Schritt b) wird die zu betrachtende Zeitspanne t festgelegt, wie dies im Zusammenhang mit den Figuren 1 und 2 erläutert wurde. In einem Schritt c) wird die übergeordnete Optimierungsfunktion F festgelegt, welche zumindest eine ökologische Kenngröße als Kostenbeitrag enthält und optional zusätzliche ökologische, ökonomische und/oder soziale Kostenbeiträge umfassen kann sowie fakultative Korrekturterme. Die einzelnen Terme können dabei mit zugehörigen Gewichtungsfaktoren gewichtet sein, wie oben beschrieben. Die Reihenfolge der drei Schritte a) bis c) ist untereinander beliebig. Zweckmäßig wird ein Schritt d) jedoch im Anschluss daran ausgeführt. Hierbei findet eine computergestützte Berechnung eines Vorhersagewertes der Optimierungsfunktion F für die betrachteten Handlungsoptionen Optl, Opt2 statt, wobei die Zeitspanne t zugrunde gelegt wird und die im Schritt a) bereitgestellte Datenbank verwendet wird. Diese Berechnung kann beispielsweise mit einer Methode der künstlichen Intelligenz und insbesondere mit einem graphenbasierten Algorithmus erfolgen. Als Ergebnis der Berechnung werden zwei Vorhersagewerte F(Optl) und F(Optl) für die Optimierungsfunktion F erhalten. Wenn mehr als zwei Handlungsoptionen Optl, Opt2 betrachtet werden, sind dies entsprechend mehr Werte. in Schritt e) wird dann schließlich diejenige Handlungsoption Optl, Opt2 ausgewählt, für welche der niedrigste Vorhersagewert F berechnet wurde. Im gezeigten Beispiel ist dies die erste Handlungsoption Optl, welche eine Reparatur und eine Weiterverwendung des ersten Produkts P1 umfasst. Optional kann hierbei auch eine Änderung der Funktionalität umgesetzt werden, wie im Zusammenhang mit Figur 1 beschrieben. Die Entscheidung zugunsten der ersten Handlungsoption Opt1 kann maßgeblich durch die wenigstens eine ökologische Kenngröße beeinflusst sein, welche als Term in der Optimierungsfunktion F enthalten ist. So kann es sein, dass bei einer rein monetären Betrachtung die zweite Handlungsoption Opt2 gewählt worden wäre. Optional kann bei der Auswahl in einem Schritt e) eine zusätzliche Randbedingung berücksichtigt werden, die eingehalten werden muss, damit eine bestimmte Handlungsoption ausgewählt werden darf. So können beispielsweise Handlungsoptionen, bei denen bestimmte Gefahrstoffe zur Herstellung eines Ersatzprodukts eingesetzt werden, an dieser Stelle ausgeschlossen werden, obwohl bei einem direkten Vergleich der Vorhersagewert der Optimierungsfunktion F niedriger wäre. Insgesamt kann das Verfahren dazu beitragen, Umweltbelastungen zu verringern, indem häufiger solche Entscheidungen getroffen werden, bei denen nachhaltiger mit den betrachteten ökologischen Ressourcen umgegangen wird. Dies erfolgt insbesondere reproduzierbar nach vordefinierten Kriterien und anhand von bekannten Lebenszyklusdaten, die als quantitative Größen in der Datenbank DB hinterlegt sind.

Bezugszeichenliste

| | |
|---|---|
| a | Bereitstellen der Datenbank |
| b | Festlegen der Zeitspanne |
| c | Festlegen der Optimierungsfunktion |
| d | Berechnung |
| DB | Datenbank |
| e | Auswahl |
| E | auslösendes Ereignis |
| F | Optimierungsfunktion |
| H | Herstellung |
| Mod1 | Erweiterung der Funktionalität |
| Mod2 | Einschränkung der Funktionalität |
| N1 | erste Nutzungsphase |

N2      zweite Nutzungsphase
Opt1     erste Handlungsoption
Opt2     zweite Handlungsoption
P1       erstes Produkt
P2       zweites Produkt
R        Reparatur
t         zu betrachtende Zeitspanne
$t_0$       Startzeitpunkt
$t_E$      Zeitpunkt des Ereignisses E
$t_F$      Ende des Betrachtungszeitpunkts
$t_G$      Ende der Produktlebensdauer
V        Verwurf

**Patentansprüche**

1. Verfahren zur Auffindung einer Entscheidung über die weitere Nutzung eines ersten Produkts (P1), welches zu einem ersten übergeordneten Produkttyp gehört,

    - wobei die Entscheidung in der Auswahl der günstigsten von wenigstens zwei Handlungsoptionen (Optl, Opt2) besteht,

        - von denen die erste Handlungsoption (Optl) eine Weiterverwendung des ersten Produkts (P1) beinhaltet
        - und von denen die zweite Handlungsoption (Opt2) einen Verwurf des ersten Produkts (P1) beinhaltet,

    - wobei das Verfahren die folgenden Schritte umfasst:

        a) Bereitstellen einer Datenbank (DB) mit einer Mehrzahl von Lebenszyklusdaten des ersten übergeordneten Produkttyps,
        b) Festlegen einer zu betrachtenden Zeitspanne (t),
        c) Festlegen einer übergeordneten Optimierungsfunktion (F), welche einen oder mehrere Kostenbeiträge enthält, die während der zu betrachtenden Zeitspanne von dem ersten Produkt (P1) verursacht werden,

           - wobei wenigstens ein enthaltener Kostenbeitrag eine ökologische Kenngröße ($C_{e1}$) ist,

        d) computergestützte Berechnung eines Vorhersagewerts (F(Opt1), F(Opt2)) der Optimierungsfunktion für die jeweilige Handlungsoption (Optl, Opt2) unter Verwendung der Datenbank (DB) und
        e) Auswahl derjenigen Handlungsoption (Optl, Opt2) mit dem niedrigsten Vorhersagewert der Optimierungsfunktion (F), optional bei gleichzeitigem Einhalten einer Randbedingung.

2. Verfahren nach Anspruch 1, bei welchem die in Schritt d) durchgeführte Berechnung im Anschluss an ein auslösendes Ereignis (E) erfolgt,

    - wobei das auslösende Ereignis (E) ein Ausfall des Produkts (P1) oder ein Erreichen einer vorgegebenen Betriebsdauer des Produkts (P1) oder eine Erfassung eines Messwertes einer physikalischen Kenngröße des ersten Produkts (P1) ist, wobei der erhaltene Messwert ein Indikator für ein nahendes Ende einer Lebensdauer des ersten Produkts (P1) ist.

3. Verfahren nach einem der vorhergehenden Ansprüche, bei welchem die erste Handlungsoption (Optl) eine Änderung der Funktionalität (Mod1, Mod2) des ersten Produkts (P1) beinhaltet und/oder bei welchem die zweite Handlungsoption (Opt2) eine Inbetriebnahme eines zweiten Produkts (P2) mit einer geänderten Funktionalität beinhaltet,

    - wobei insbesondere die jeweilige Änderung der Funktionalität zu einer Änderung des Vorhersagewerts für die wenigstens eine ökologische Kenngröße ($C_{e1}$) führt.

4. Verfahren nach Anspruch 3, bei welchem die jeweilige Änderung der Funktionalität (Mod1, Mod2) durch einen Zusatzterm der übergeordneten Optimierungsfunktion (F) berücksichtigt wird.

5. Verfahren nach einem der vorhergehenden Ansprüche, bei welchem die in Schritt a) bereitgestellte Datenbank (DB) reale Nutzungsdaten des ersten Produkts (P1) enthält, welche von dem ersten Produkt (P1) erfasst worden sind, wobei insbesondere die Berechnung des Vorhersagewerts (F(Opt1)) in Schritt d) auf der Grundlage eines Simulationsmodells unter Berücksichtigung der realen Nutzungsdaten erfolgt.

6. Verfahren nach einem der vorhergehenden Ansprüche, bei welchem die in Schritt a) bereitgestellte Datenbank (DB) statistische Lebenszyklusdaten für eine Vielzahl von Produkten des ersten übergeordneten Produkttyps enthält.

7. Verfahren nach Anspruch 6, bei welchem die Datenbank (DB) Daten umfasst

   - über die bei der Herstellung der Produkte eingesetzte Energie,
   - über die bei der Herstellung der Produkte eingesetzten Materialien,
   - über die beim Betrieb der Produkte eingesetzte Energie,
   - über die beim Betrieb der Produkte eingesetzten Materialien,
   - über die beim Betrieb der Produkte freigesetzte Energie,
   - über die beim Betrieb der Produkte freigesetzten Materialien,
   - über die Nutzungsdauer der Produkte,
   - über die Recyclingquote der Produkte,
   - über die bei der Entsorgung oder beim Recycling der Produkte eingesetzte oder freigesetzte Energie,
   - über die bei der Entsorgung oder beim Recycling der Produkte eingesetzten Materialien,
   - über die bei der Entsorgung oder beim Recycling der Produkte an die Umwelt freigesetzten Materialien,
   - über die beim Recycling der Produkte rückgewonnenen Materialien und/oder
   - über weitere Umweltbelastungen beim Betrieb, der Entsorgung und/oder des Recyclings der Produkte.

8. Verfahren nach einem der vorhergehenden Ansprüche, bei welchem die wenigstens eine ökologische Kenngröße ($C_{e1}$) ein Energieeinsatz, ein Wasserverbrauch, ein anderer Materialverbrauch, ein $CO_2$-Ausstoß, ein Ausstoß eines anderen klimawirksamen Gases, ein Ozonausstoß, eine Freisetzung einer Säure, eine Freisetzung eines Giftstoffs und/oder eine Freisetzung eines anderen umweltschädlichen oder gesundheitsschädlichen Stoffs ist.

9. Verfahren nach einem der vorhergehenden Ansprüche, bei welchem die wenigstens eine ökologische Kenngröße ($C_{e1}$) ein physikalisch messbarer Wert ist.

10. Verfahren nach einem der vorhergehenden Ansprüche, bei welchem die übergeordnete Optimierungsfunktion (F) mehrere ökologische ($C_{e1}$, $C_{e2}$) und/oder ökonomische Kenngrößen ($C_m$) und/oder soziale Kenngrößen als Kostenbeiträge enthält, welche jeweils mit Gewichtungsfaktoren ($g_{e1}$, $g_{e2}$, $g_m$) in die übergeordnete Optimierungsfunktion (F) eingehen,

    - wobei die Gewichtungsfaktoren ($g_{e1}$, $g_{e2}$, $g_m$) optional durch eine Benutzereingabe angepasst werden können.

11. Verfahren nach einem der Ansprüche 1 bis 10, bei welchem die zu betrachtende Zeitspanne (t) so lang gewählt wird, dass bei der ersten Handlungsoption (Optl) das zu erwartende Ende der Nutzungsdauer ($t_G$) des ersten Produkts (P1) in der Zeitspanne (t) enthalten ist.

12. Verfahren nach einem der Ansprüche 1 bis 10, bei welchem die zu betrachtende Zeitspanne (t) so kurz gewählt wird, dass bei der ersten Handlungsoption (Optl) das zu erwartende Ende der Nutzungsdauer ($t_G$) des ersten Produkts außerhalb der Zeitspanne (t) liegt.

13. Verfahren nach einem der vorhergehenden Ansprüche, bei welchem die Berechnung in Schritt d) durch ein lernendes System erfolgt, bei dem Methoden der künstlichen Intelligenz zum Einsatz kommen,

    - wobei insbesondere ein strukturiertes Datenmodell für die Beschreibung der Zusammenhänge zwischen den Lebenszyklusdaten in der Datenbank (DB) zum Einsatz kommt.

14. Verfahren nach einem der vorhergehenden Ansprüche, bei welchem das erste Produkt (P1) eine Maschine ist.

15. Computerprogrammprodukt umfassend Befehle, wobei die Befehle bei der Ausführung des Computerprogrammprodukts auf einem Computer diesen dazu veranlassen, das Verfahren gemäß einem der vorhergehenden Ansprüche 1 bis 14 auszuführen.

# FIG 1

# FIG 2

EP 4 383 161 A1

FIG 3

Europäisches
Patentamt

European
Patent Office

Office européen
des brevets

**EUROPÄISCHER RECHERCHENBERICHT**

Nummer der Anmeldung

EP 22 21 2402

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DAHANE MOHAMMED ET AL: "Impact of spare parts remanufacturing on the operation and maintenance performance of offshore wind turbines: a multi-agent approach", JOURNAL OF INTELLIGENT MANUFACTURING, SPRINGER US, NEW YORK, Bd. 28, Nr. 7, 12. Oktober 2015 (2015-10-12), Seiten 1531-1549, XP036322522, ISSN: 0956-5515, DOI: 10.1007/S10845-015-1154-1 [gefunden am 2015-10-12] | 1-6,9, 11,12, 14,15 | INV. G06Q10/0637 |
| Y | * Seite 1532, rechte Spalte * * Seite 1534, linke Spalte * * Seite 1542, rechte Spalte - Seite 1543, rechte Spalte * * Seite 1547, linke Spalte * ----- | 7,8,10, 13 | |
| Y | US 2010/249975 A1 (REZAYAT MOHSEN [US]) 30. September 2010 (2010-09-30) * Absatz [0028] - Absatz [0034] * * Absatz [0040] - Absatz [0047] * ----- | 7,8,10 | |
| Y | GHOROGHI ALI ET AL: "Advances in application of machine learning to life cycle assessment: a literature review", THE INTERNATIONAL JOURNAL OF LIFE CYCLE ASSESSMENT, SPRINGER, DE, Bd. 27, Nr. 3, 1. März 2022 (2022-03-01), Seiten 433-456, XP037805342, ISSN: 0948-3349, DOI: 10.1007/S11367-022-02030-3 [gefunden am 2022-03-28] * Seite 444, rechte Spalte * ----- -/-- | 13 | **RECHERCHIERTE SACHGEBIETE (IPC)** G06Q |

Der vorliegende Recherchenbericht wurde für alle Patentansprüche erstellt

| Recherchenort | Abschlußdatum der Recherche | Prüfer |
|---|---|---|
| München | 2. November 2023 | Hasubek, Bodo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

Nummer der Anmeldung

EP 22 21 2402

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BOVEA MARÍA D ET AL: "Repair vs. replacement: Selection of the best end-of-life scenario for small household electric and electronic equipment based on life cycle assessment", JOURNAL OF ENVIRONMENTAL MANAGEMENT, ELSEVIER, AMSTERDAM, NL, Bd. 254, 28. November 2019 (2019-11-28), XP085941320, ISSN: 0301-4797, DOI: 10.1016/J.JENVMAN.2019.109679 [gefunden am 2019-11-28] * Seite 2, rechte Spalte - Seite 4, linke Spalte * ----- | 1-15 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 2. November 2023 | Hasubek, Bodo |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
   Dokument

EPO FORM 1503 03.82 (P04C03)

Seite 2 von 2

## ANHANG ZUM EUROPÄISCHEN RECHERCHENBERICHT
## ÜBER DIE EUROPÄISCHE PATENTANMELDUNG NR.

EP 22 21 2402

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-11-2023

| Im Recherchenbericht angeführtes Patentdokument | Datum der Veröffentlichung | Mitglied(er) der Patentfamilie | Datum der Veröffentlichung |
|---|---|---|---|
| US 2010249975 A1 | 30-09-2010 | KEINE | |

Für nähere Einzelheiten zu diesem Anhang : siehe Amtsblatt des Europäischen Patentamts, Nr.12/82